(19) Europäisches Patentamt / European Patent Office / Office européen des brevets

(11) **EP 4 372 428 A2**

(12) **EUROPEAN PATENT APPLICATION**

(43) Date of publication:
**22.05.2024 Bulletin 2024/21**

(21) Application number: **23205561.6**

(22) Date of filing: **24.10.2023**

(51) International Patent Classification (IPC):
**G02B 5/04** (2006.01)     **G02B 13/00** (2006.01)
**G02B 27/00** (2006.01)     **G02B 5/00** (2006.01)

(52) Cooperative Patent Classification (CPC):
**G02B 27/0018; G02B 5/0215; G02B 5/04;
G02B 5/22; G02B 13/0065**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **18.11.2022   US 202263426677 P
07.06.2023   TW 112121159**

(71) Applicant: **Largan Precision Co. Ltd.
Taichung City (TW)**

(72) Inventors:
 • **Fan, Chen Wei
  Taichung City, R. O. C. (TW)**

 • **LAI, Syuan Ruei
  Taichung City, R. O. C. (TW)**
 • **CHENG, JYUN-JIA
  Taichung City, R. O. C. (TW)**
 • **CHOU, Ming-Ta
  Taichung City, R. O. C. (TW)**

(74) Representative: **dompatent von Kreisler Selting
Werner -
Partnerschaft von Patent- und Rechtsanwälten
mbB
Deichmannhaus am Dom
Bahnhofsvorplatz 1
50667 Köln (DE)**

(54)   **OPTICAL PATH FOLDING ELEMENT, IMAGING LENS MODULE AND ELECTRONIC DEVICE**

(57)      An optical path folding element (100) includes an optical portion (110), a connection portion (120), matte structures (130) and a light blocking layer (140). The optical portion (110) has an optical surface (111) and two reflective surfaces (112, 113). A light beam enters into the optical path folding element (100) via the optical surface (111) and is reflected inside the optical path folding element (100) through the optical surface (111). Each reflective surface (112, 113) is configured to reflect the light beam again inside the optical path folding element (100). The connection portion (120) has connection surfaces (121) connected to the optical surface (111) and the reflective surfaces (112, 113). The matte structures (130) are at least disposed on and integrally formed with the connection portion (120). Each unitary structure of the matte structures (130) is tapered off and recessed from the connection portion (120), such that the outer surface of the connection portion (120) has an undulating shape. The light blocking layer (140) is at least disposed on the connection portion (120) for blocking light.

FIG. 4

EP 4 372 428 A2

## Description

## BACKGROUND

Technical Field

The present disclosure relates to an optical path folding element, an image lens module and an electronic device, more particularly to an optical path folding element and an image lens module applicable to an electronic device.

Description of Related Art

With the development of technology, featuring high image quality becomes one of the indispensable features of an optical system nowadays. Furthermore, electronic devices equipped with optical systems are trending towards multi-functionality for various applications, and therefore the functionality requirements for the optical systems have been increasing.

However, conventional optical systems are difficult to meet the requirements of miniaturization and high imaging quality of an electronic device under diversified development in recent years, especially non-imaging light is easily to be generated due to the configuration inside a miniaturized lens, which leads poor optical quality, and therefore is difficult to meet progressive market requirements in optical quality nowadays. Therefore, how to improve the components and the configuration inside a lens to prevent generating non-imaging light for meeting the requirement of high-end-specification electronic devices is an important topic in this field nowadays.

## SUMMARY

According to one aspect of the present disclosure, an optical path folding element includes an optical portion, a connection portion, a plurality of matte structures, and a light blocking layer. The optical portion has an optical surface, a first reflective surface, and a second reflective surface. A light beam enters into the optical path folding element via the optical surface and is reflected inside the optical path folding element through the optical surface. The first reflective surface is configured to reflect the light beam again inside the optical path folding element. The second reflective surface is configured to reflect the light beam further again inside the optical path folding element. The connection portion has a plurality of connection surfaces connected to the optical surface, the first reflective surface and the second reflective surface. The plurality of matte structures are at least disposed on and integrally formed with the connection portion. Each unitary structure of the plurality of matte structures is tapered off and recessed from an outer surface of the connection portion towards an inner side of the optical path folding element, such that the outer surface of the connection portion has an undulating shape. The light blocking layer is at least disposed on the outer surface of the connection portion for blocking light from passing through.

According to another aspect of the present disclosure, an optical path folding element includes an optical portion, a connection portion, and a light blocking layer. The optical portion has an optical surface, a first reflective surface, and a second reflective surface. A light beam enters into the optical path folding element via the optical surface and is reflected inside the optical path folding element through the optical surface. The first reflective surface is configured to reflect the light beam again inside the optical path folding element. The second reflective surface is configured to reflect the light beam further again inside the optical path folding element. The connection portion has a plurality of connection surfaces connected to the optical surface, the first reflective surface and the second reflective surface. The light blocking layer is at least disposed on the connection portion for blocking light from passing through. A material of the light blocking layer comprises acrylic monomer and black pigment.

According to further another aspect of the present disclosure, an optical path folding element includes an optical portion, a connection portion, a plurality of matte structures, and a light blocking layer. The optical portion has an optical surface, a first reflective surface, and a second reflective surface. A light beam enters into the optical path folding element via the optical surface. The first reflective surface is configured to reflect the light beam inside the optical path folding element. The second reflective surface is configured to reflect the light beam again inside the optical path folding element. The connection portion has a plurality of connection surfaces and at least one gate trace. The plurality of connection surfaces are connected to the optical surface, the first reflective surface and the second reflective surface. The at least one gate trace is located on at least one of the plurality of connection surfaces. The plurality of matte structures are at least disposed on and integrally formed with the connection portion, and the plurality of matte structures have at least part disposed on the connection portion to surround the at least one gate trace. Each unitary structure of the plurality of matte structures is tapered off and recessed from an outer surface of the connection portion towards an inner side of the optical path folding element, such that the outer surface of the connection portion has an undulating shape. The light blocking layer is at least disposed on the connection portion for blocking light from passing through.

According to still further another aspect of the present disclosure, an optical path folding element has a material including plastic and includes an optical portion, a connection portion, and a light blocking layer. The optical portion has an optical surface, a first reflective surface, and a second reflective surface. A light beam enters into the optical path folding element via the optical surface. The first reflective surface is configured to reflect the light beam inside the optical path folding element. The second reflective surface is configured to reflect the light beam again inside the optical path folding element. The connection portion has a plurality of connection surfaces and a narrowed structure. The plurality of connection surfaces are connected to the optical surface, the first reflective surface and the second reflective surface. The narrowed structure is formed by at least part of the plurality of connection surfaces and partially reducing an aperture size inside the optical path folding element. The light blocking layer is at least disposed on at least outer surface of the connection portion for blocking light from passing through. A material of the light blocking layer comprises acrylic monomer and black pigment.

According to still further another aspect of the present disclosure, an image lens module includes one of the aforementioned optical path folding elements, a lens assembly, and an image sensor. The lens assembly is disposed adjacent to the optical path folding element, and the light beam passes through the lens assembly. The image sensor is disposed adjacent to the optical path folding element, and the image sensor is configured to receive the light beam.

According to still further another aspect of the present disclosure, an electronic device includes the aforementioned image lens module.

## BRIEF DESCRIPTION OF THE DRAWINGS

The disclosure can be better understood by reading the following detailed description of the embodiments, with reference made to the accompanying drawings as follows:

Fig. 1 is a perspective view of an imaging lens module according to the 1st embodiment of the present disclosure;
Fig. 2 is a cross-sectional view of the imaging lens module sectioned along line A-A in Fig. 1;
Fig. 3 is a top view of an aperture stop of the imaging lens module in Fig. 2;
Fig. 4 is an exploded view of the imaging lens module in Fig. 1;
Fig. 5 is a perspective view of an optical path folding element of the imaging lens module in Fig. 1;
Fig. 6 is another perspective view of the optical path folding element in Fig. 5;
Fig. 7 is further another perspective view of the optical path folding element in Fig. 5;
Fig. 8 is a perspective view of the optical path folding element sectioned along line B-B in Fig. 5;
Fig. 9 is a top view of the optical path folding element in Fig. 5;
Fig. 10 is an enlarged view of region MM in Fig. 9;
Fig. 11 is a side view of the optical path folding element in Fig. 5;
Fig. 12 is a front view of the optical path folding element in Fig. 5;

Fig. 13 is a perspective view of an optical path folding element of an imaging lens module according to the 2nd embodiment of the present disclosure;
Fig. 14 is an exploded view of the optical path folding element in Fig. 13;
Fig. 15 is a perspective view of a light blocking sheet of the optical path folding element in Fig. 13;
Fig. 16 is a perspective view of an imaging lens module according to the 3rd embodiment of the present disclosure;
Fig. 17 is a cross-sectional view of the imaging lens module sectioned along line C-C in Fig. 16;
Fig. 18 is an exploded view of the imaging lens module in Fig. 16;
Fig. 19 is a perspective view of an optical path folding element of the imaging lens module in Fig. 16;
Fig. 20 is a perspective view of the optical path folding element sectioned along line D-D in Fig. 19;
Fig. 21 is a perspective view of the optical path folding element sectioned along line E-E in Fig. 19;
Fig. 22 is an enlarged view of region NN in Fig. 21;
Fig. 23 is a top view of the optical path folding element in Fig. 19;
Fig. 24 is an enlarged view of region OO in Fig. 23;
Fig. 25 is a side view of the optical path folding element in Fig. 19;
Fig. 26 is a front view of the optical path folding element in Fig. 19;
Fig. 27 is a perspective view of an optical path folding element of an imaging lens module according to the 4th embodiment of the present disclosure;
Fig. 28 is an exploded view of the optical path folding element in Fig. 27;
Fig. 29 is a top view of the optical path folding element in Fig. 27;
Fig. 30 is a perspective view of an optical path folding element of an imaging lens module according to the 5th embodiment of the present disclosure;
Fig. 31 is a perspective view of the optical path folding element sectioned along line F-F in Fig. 30;
Fig. 32 is another perspective view of the optical path folding element in Fig. 30;
Fig. 33 is an enlarged view of region PP in Fig. 32;
Fig. 34 is a top view of the optical path folding element in Fig. 30; and
Fig. 35 is an exploded view of an electronic device according to the 6th embodiment of the present disclosure.

## DETAILED DESCRIPTION

In the following detailed description, for purposes of explanation, numerous specific details are set forth in order to provide a thorough understanding of the disclosed embodiments. It will be apparent, however, that one or more embodiments may be practiced without these specific details. In other instances, well-known structures and devices are schematically shown in order to simplify the drawing.

The present disclosure provides an optical path folding element, whose material can include plastic. The optical path folding element includes an optical portion, a connection portion and a light blocking layer.

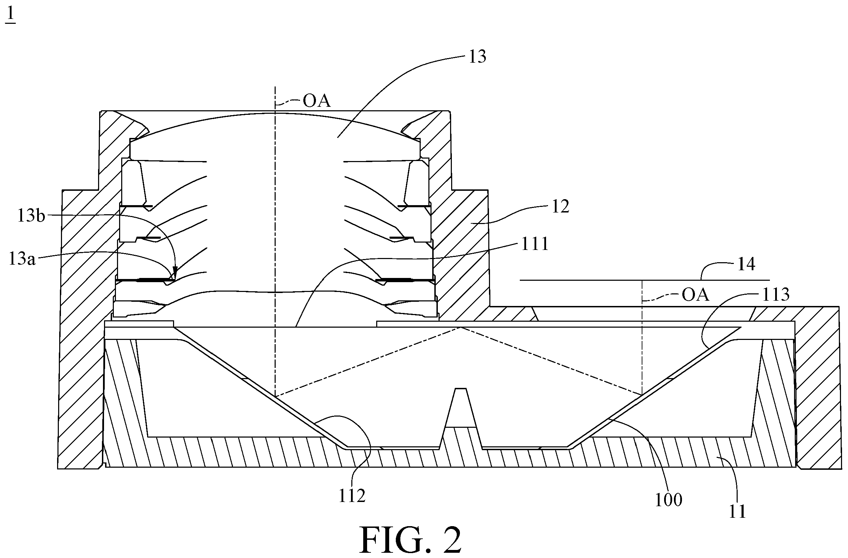

The optical portion has an optical surface, a first reflective surface and a second reflective surface. A light beam enters into the optical path folding element via the optical surface. The light beam is reflected inside the optical path folding element through the first reflective surface and is reflected again inside the optical path folding element through the second reflective surface. Moreover, each of the first reflective surface and the second reflective surface can be provided with a reflective layer, so that the reflective effect for the light beam can be achieved. Moreover, the optical surface can reflect the light beam further again inside the optical path folding element. Moreover, the optical surface can reflect the light beam through total internal reflection, such that the light beam can be simultaneously transmitted through and reflected by the optical surface. Moreover, the material of the optical portion can include plastic. Therefore, it is favorable for designing an optical path folding element with many kinds of surfaces. Moreover, the reflected light beam can emit from the optical path folding element via the optical surface. Therefore, the optical surface is favorable for integrating the functions of the incident surface, the emitting surface and the reflective surface, thereby simplifying the appearance of the optical path folding element. Please refer to Fig. 2, which is a cross-sectional view of the imaging lens module 1 according to the 1st embodiment of the present disclosure, wherein the light beam emits from the optical path folding element 100 via the optical surface 111 along the optical axis OA, and the functions of the incident surface, the emitting surface and the reflective surface are integrated into the optical surface 111.

The optical portion can further have a second optical surface, into which many kinds of functions such as light emitting and light reflecting can be integrated. And, the light beam can emit from the optical path folding element via the second optical surface.

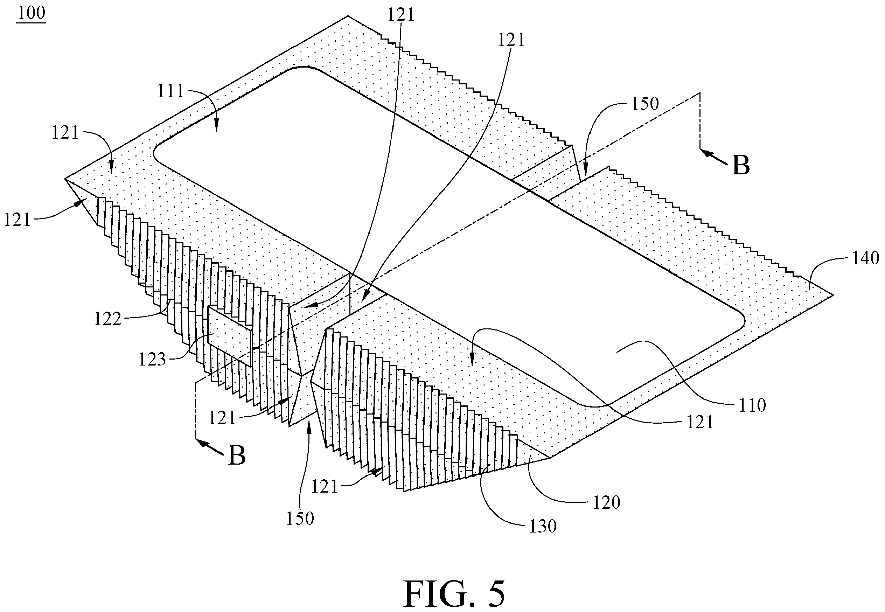

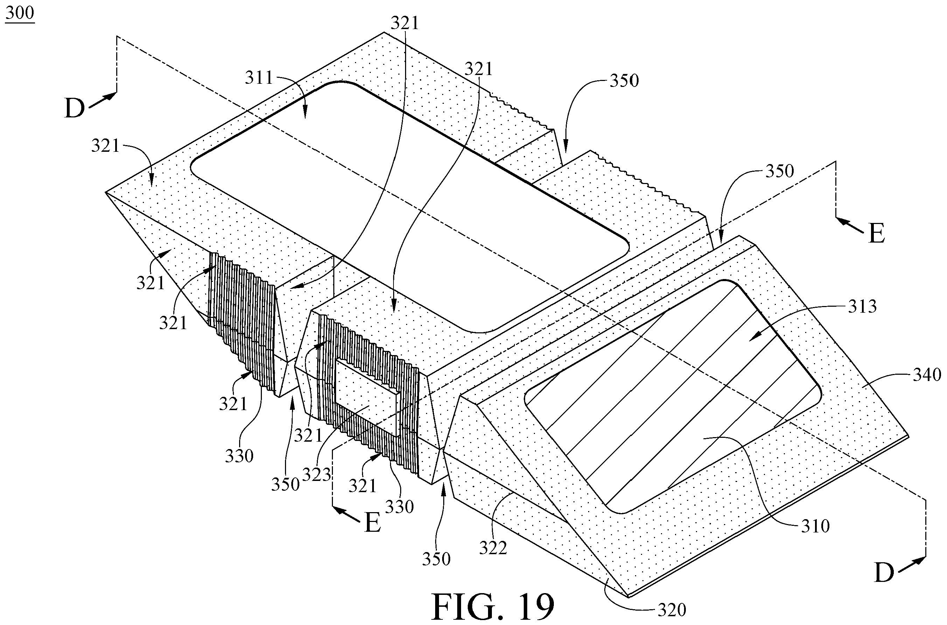

The connection portion can have a plurality of connection surfaces connected to the optical surface, the first reflective surface and the second reflective surface. Moreover, the optical portion can be recessed with respect to the connection portion located around the optical portion. Therefore, a surface of the connection portion can be served as an abutting surface during assembly, which is favorable for controlling optical quality of the optical portion and preventing damaging the optical portion. Moreover, the connection portion can further have at least one gate trace that can be located on at least one connection surface. By disposing the gate trace generated through a plastic injection molding process on the connection portion, it is favorable for enhancing the surface quality of the optical surface, the first reflective surface and the second reflective surface, and it is also favorable for preventing the gate trace from affecting imaging quality. Please refer to Fig. 5 and Fig. 19, which respectively show the gate trace 123 of the optical path folding element 100 and the gate trace 323 of the optical path folding element 300 according to the 1st embodiment and the 3rd embodiment of the present disclosure.

The light blocking layer is at least disposed on part of the outer surfaces of the connection portion for blocking light from passing through. Moreover, the material of the light blocking layer can include acrylic monomer and black pigment. Therefore, it is favorable for improving the adhesion of the light blocking layer and providing a good light-blocking performance for the optical path folding element with a relatively complicated appearance. Alternatively, the material of the light blocking layer can include organic solvents such as propylene glycol monomethyl ether acetate (PGMEA) and acrylic resin. Alternatively, the material of the light blocking layer can include light-curable coating. The present disclosure is not limited to the materials of the light blocking layer. The light blocking layer can be liquid at the initial state. The liquid light blocking layer can be coated on the outer surfaces of the connection portions and then can be cured through irradiation of a light source. The irradiation of the light source (e.g., excimer laser) can be in the ultraviolet band for accurately developing the light blocking layer. Moreover, the outer surfaces of the connection portion can be roughened, which is favorable for the arrangement of the light blocking layer thereon. Moreover, the light blocking layer can be further disposed on the gate trace. Therefore, it is favorable for preventing stray light from being reflected on the gate trace.

With the design of the optical portion, the light beam can be reflected inside the optical path folding element several times, which facilitates a miniaturization design of the imaging lens module. Further, the arrangement of the light blocking layer on the connection portion facilitates the reduction of stray light generated on the connection portion. Accordingly, the imaging lens module can achieve the miniaturization and the reduction of stray light therein simultaneously through the arrangement of the optical path folding element, thereby improving overall optical quality.

The optical path folding element can further include a plurality of matte structures that are at least disposed on and integrally formed with the connection portion. Each unitary structure of the matte structures is tapered off and recessed from the outer surfaces of the connection portion towards the inner side of the optical path folding element, such that the outer surfaces of the connection portion can have undulating shapes. With the arrangement of the matte structures on the connection portion, it is favorable for further reducing stray light generated on the connection portion. Moreover, the matte structures can have at least part surrounding the gate trace. Therefore, it is favorable for reducing stray light generated around the gate trace.

The connection portion of the optical path folding element can further have a narrowed structure that can be formed by at least part of the connection surfaces and can partially reduce the aperture size inside the optical path folding element. The partial reduction of the aperture size inside the optical path folding element can be achieved by shrinking the appearance of the narrowed structure towards the inner side of the optical path folding element, thereby further reducing stray light. Moreover, the narrowed structure can be disposed between the first reflective surface and the second reflective surface, and the narrowed structure can be covered by the light blocking layer. Therefore, it is favorable for blocking stray light between the first reflective surface and the second reflective surface. Moreover, the narrowed structure can further have a step structure at periphery thereof. The step structure can form a protrusion or a recess at the periphery of the narrowed structure. Therefore, it is favorable for controlling the arrangement range of the light blocking layer.

The optical path folding element can further include a light blocking sheet. The light blocking sheet can be a flat element having a trimmed part towards the inner side of the optical path folding element, and the light blocking sheet can be coated with a light blocking coating. Therefore, it is favorable for further reducing stray light in the optical path folding element.

When a recess depth of each unitary structure of the matte structures is h, the following condition can be satisfied: 0.02 [mm] $\leq$ h $\leq$ 1.6 [mm]. Therefore, it is favorable for reducing reflection of stray light.

The connection portion can further have a boundary line located between two of the connection surfaces, and the two connection surfaces respectively located at opposite sides of the boundary line are angled to each other by an angle. When the angle between the two connection surfaces respectively located at the opposite sides of the boundary line is θ, the following condition can be satisfied: 130 [deg.] $\leq$ θ $\leq$ 179 [deg.]. Therefore, it is favorable for improving molding quality of the connection portion, and it is also favorable for changing the path of stray light reflected on the connection surfaces.

When a thickness of the optical path folding element along a direction perpendicular to the optical surface is T, and a distance between the boundary line and the optical surface along the direction perpendicular to the optical surface is d, the following condition can be satisfied: 0.25 $\leq$ d/T $\leq$ 0.75. Therefore, it is favorable for preventing the boundary line from affecting surface quality of the optical portion by arranging the boundary line on the connection portion.

The present disclosure provides an imaging lens module that includes the abovementioned optical path folding element, a lens assembly and an image sensor. Each of the lens assembly and the image sensor is disposed adjacent to the optical path folding element. The lens assembly is configured for the light beam passes therethrough. The image sensor is configured to receive the light beam. Moreover, the lens assembly can have an aperture stop, and the aperture stop is elliptical. Therefore, the elliptical aperture stop is favorable for blocking redundant light.

The present disclosure provides an electronic device that includes the abovementioned imaging lens module.

According to the present disclosure, the aforementioned features and conditions can be utilized in numerous combinations so as to achieve corresponding effect.

According to the above description of the present disclosure, the following specific embodiments are provided for further explanation.

## 1st Embodiment

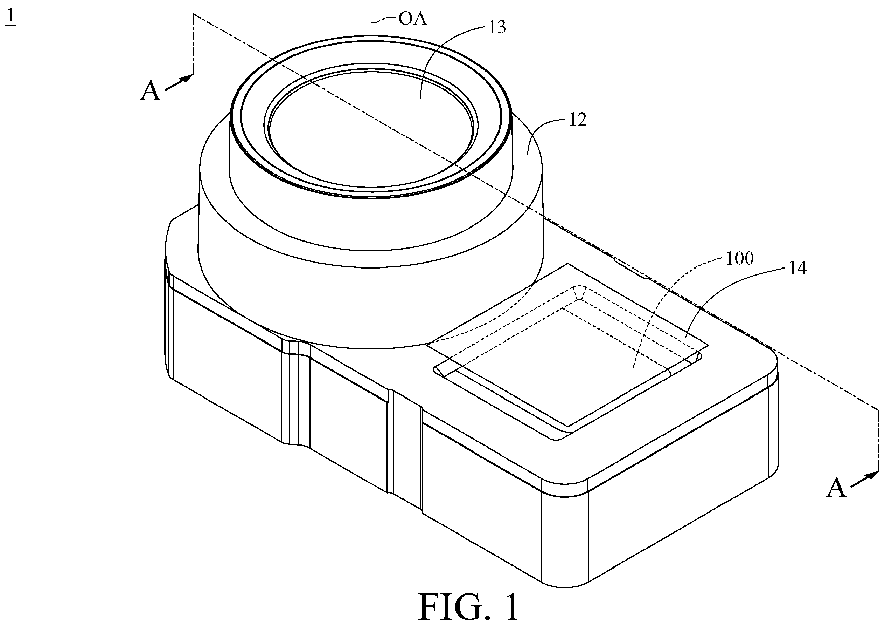

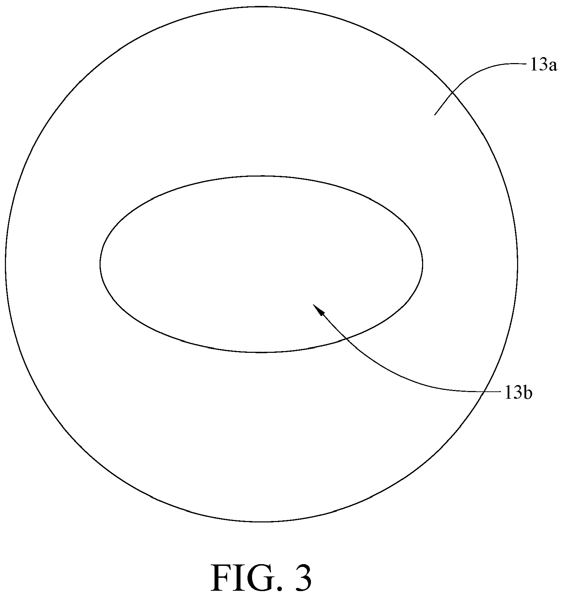

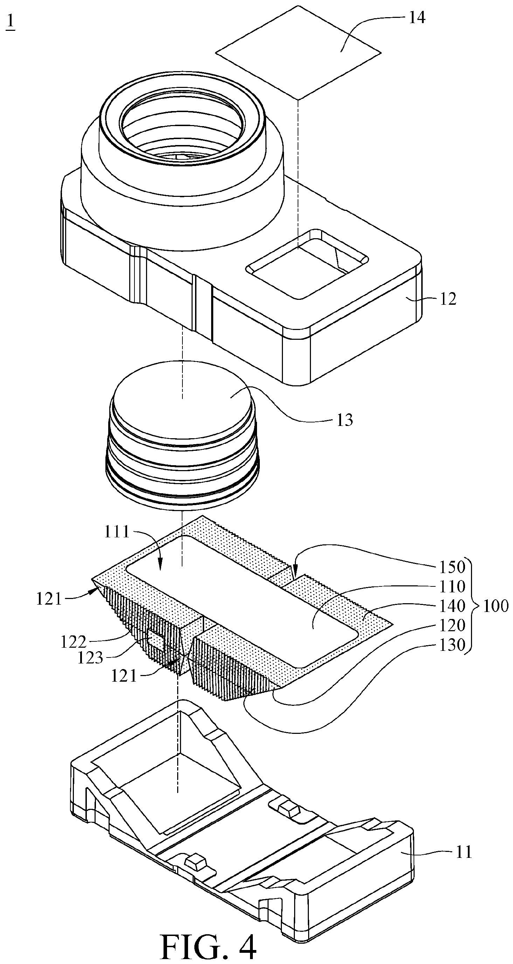

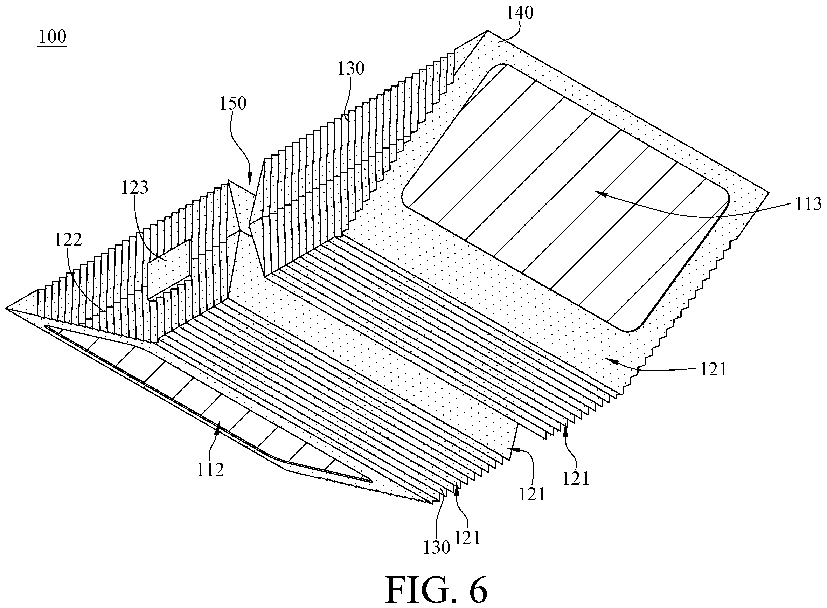

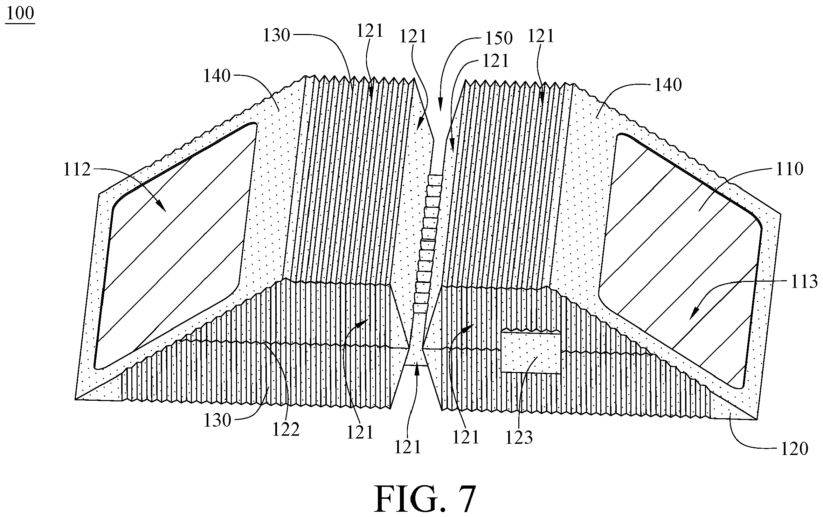

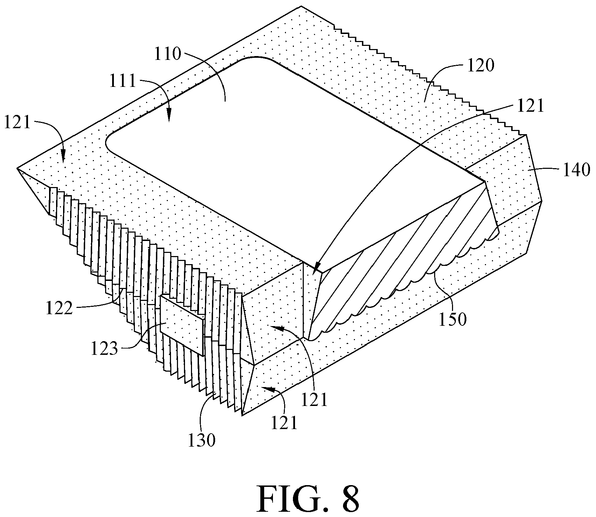

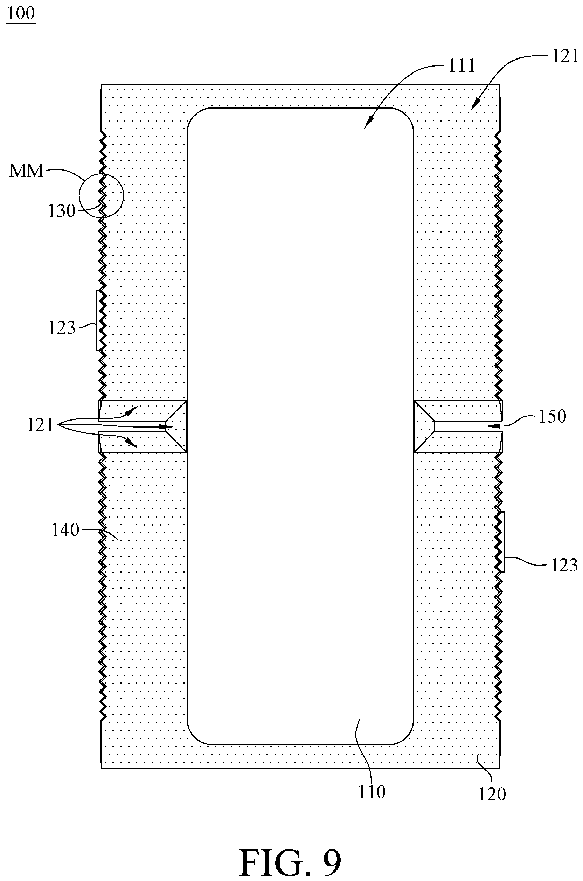

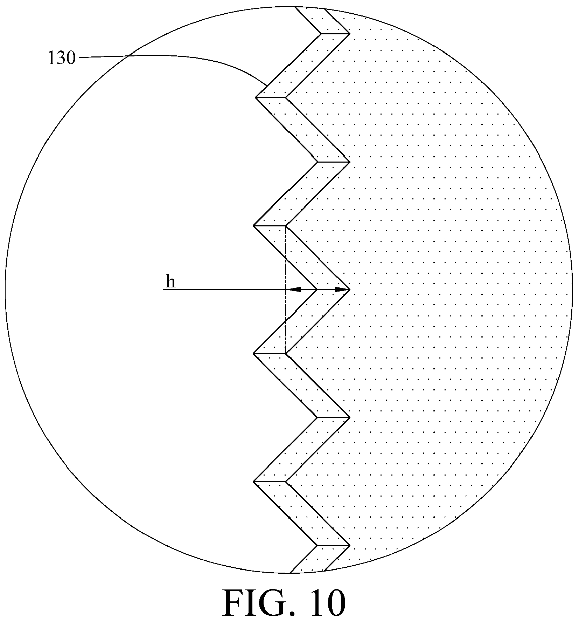

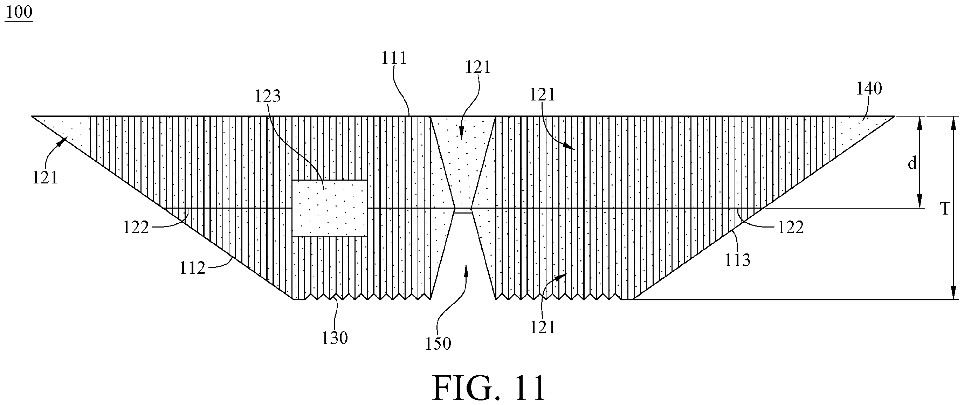

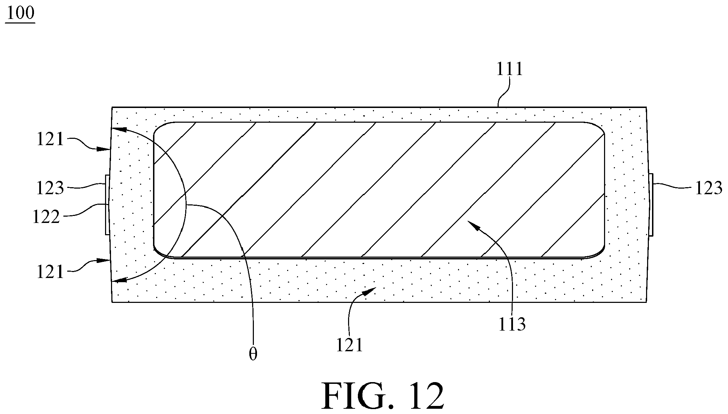

Please refer to Fig. 1 to Fig. 12, where Fig. 1 is a perspective view of an imaging lens module according to the 1st embodiment of the present disclosure, Fig. 2 is a cross-sectional view of the imaging lens module sectioned along line A-A in Fig. 1, Fig. 3 is a top view of an aperture stop of the imaging lens module in Fig. 2, Fig. 4 is an exploded view of the imaging lens module in Fig. 1, Fig. 5 is a perspective view of an optical path folding element of the imaging lens module in Fig. 1, Fig. 6 is another perspective view of the optical path folding element in Fig. 5, Fig. 7 is further another perspective view of the optical path folding element in Fig. 5, Fig. 8 is a perspective view of the optical path folding element sectioned along line B-B in Fig. 5, Fig. 9 is a top view of the optical path folding element in Fig. 5, Fig. 10 is an enlarged view of region MM in Fig. 9, Fig. 11 is a side view of the optical path folding element in Fig. 5, and Fig. 12 is a front view of the optical path folding element in Fig. 5.

This embodiment provides an imaging lens module 1 that includes a fixed element 11, an accommodation element 12, an optical path folding element 100, a lens assembly 13 and an image sensor 14. The accommodation element 12 is disposed on the fixed element 11 for forming an accommodation space (not numbered) therebetween. The optical path folding element 100 is disposed in the accommodation space. The lens assembly 13 is disposed in the accommodation space and is located at an object side of the optical path folding element 100 along an optical path, such that a light beam is able to be incident into the optical path folding element 100 after passing through the lens assembly 13 along an optical axis OA. The lens assembly 13 has an aperture stop 13a, and the aperture stop 13a has an elliptical aperture 13b for blocking redundant light, as shown in Fig. 3. Please be noted that the detail of the lens assembly 13 is not intended to restrict the present disclosure, and therefore only partial contour of the lens assembly 13 is shown in the drawings. The image sensor 14 is disposed outside the accommodation space and is located at an image side of the optical path folding element 100 so as to receive the light beam emitting from the optical path folding element 100.

The material of the optical path folding element 100 may include plastic. The optical path folding element 100 includes an optical portion 110, a connection portion 120, a plurality of matte structures 130 and a light blocking layer 140.

The optical portion 110 is made of plastic material, and the optical portion 110 has an optical surface 111, a first reflective surface 112 and a second reflective surface 113. The optical surface 111 integrates several functions of light incident, light emitting, and light reflection. The first reflective surface 112 is provided with a reflective layer. The second reflective surface 113 is also provided with a reflective layer. As shown in Fig. 2, a light beam passes through the lens assembly 13 along the optical axis OA to be incident into the optical path folding element 100 via the optical surface 111. In the optical path folding element 100, the first reflective surface 112 reflects the light beam, the optical surface 111 reflects the light beams again (through total internal reflection), and the second reflective surface 113 reflects the light beam further again. Then, the light beam emits towards the image sensor 14 from the optical path folding element 100 via the optical surface 111.

The connection portion 120 is made of plastic. The connection portion 120 is located at the periphery of the optical portion 110, and the optical portion 110 is recessed with respect to the connection portion 120. The connection portion 120 has a plurality of connection surfaces 121, two boundary lines 122 and two gate traces 123. The connection surfaces 121 are connected to the optical surface 111, the first reflective surface 112 and the second reflective surface 113. The boundary lines 122 are disposed between the connection surfaces 121. The gate traces 123 are located on the connection surfaces 121.

As shown in Fig. 11, when a thickness of the optical path folding element 100 along a direction perpendicular to the optical surface 111 is T, and a distance between the boundary lines 122 and the optical surface 111 along the direction perpendicular to the optical surface 111 is d, the following conditions are satisfied: d = 1.46 [mm]; T = 2.9 [mm]; and d/T = 0.5.

As shown in Fig. 12, two of the connection surfaces 121 respectively located at opposite sides of each boundary line 122 are angled to each other by an angle. When the angle between the two connection surfaces 121 respectively located at the opposite sides of each boundary line 122 is θ, the following condition is satisfied: θ = 176 [deg.].

The matte structures 130 are disposed on and integrally formed with the connection portion 120, and at least part of the matte structures 130 is located at the periphery of the gate traces 123. As shown in Fig. 9 and Fig. 10, each unitary structure of the matte structures 130 is tapered off from an outer surface of the connection portion 120 towards the inner side of the optical path folding element 100 to form a triangular recess, such that the outer surface of the connection portion 120 has an undulating shape.

As shown in Fig. 10, when a recess depth of each unitary structure of the matte structures 130 is h, the following condition is satisfied: h = 0.1 [mm].

The light blocking layer 140 is disposed on the outer surfaces of the connection portion 120 for blocking light from passing through, and at least part of the light blocking layer 140 is located on the gate traces 123. Please be noted that the distribution range of the dot screentone shown in Fig. 1 to Fig. 12 refers to the arrangement range of the light blocking layer 140.

The connection portion 120 further has a narrowed structure 150. The narrowed structure 150 is disposed between the first reflective surface 112 and the second reflective surface 113, and the narrowed structure 150 may be formed by at least part of the connection surfaces 121. As shown in Fig. 8, the narrowed structure 150 is shrunk towards the inner side of the optical path folding element 100 and is provided with the light blocking layer 140 thereon, such that the aperture size inside the optical path folding element 100 is partially reduced.

### 2nd Embodiment

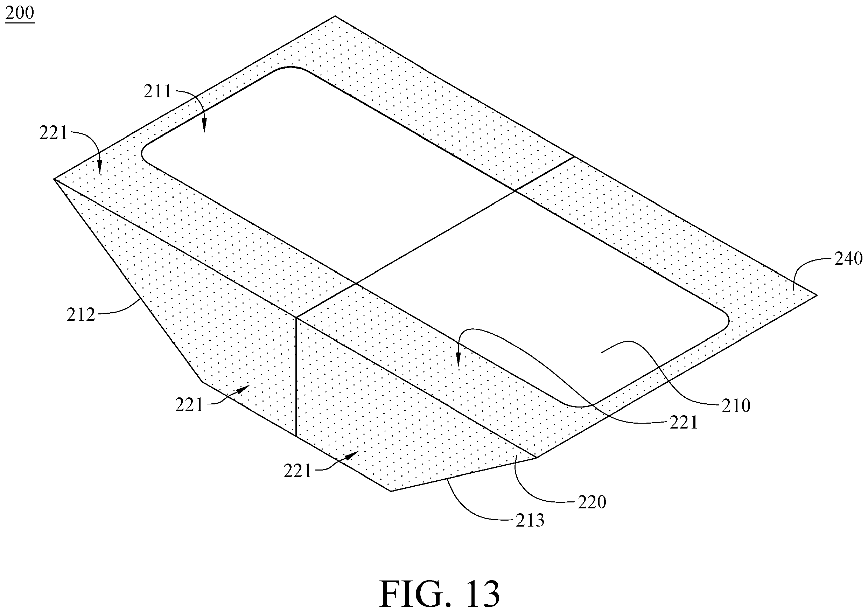

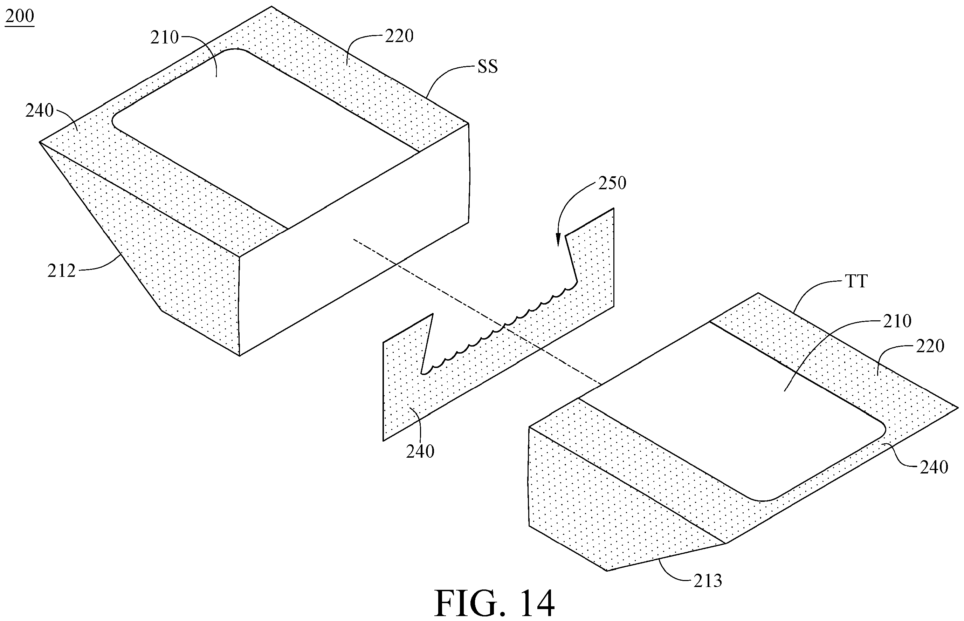

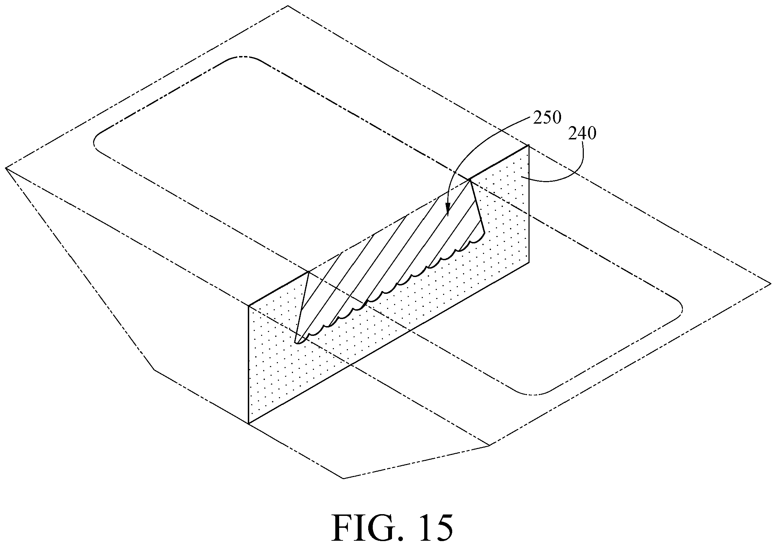

Please refer to Fig. 13 to Fig. 15, where Fig. 13 is a perspective view of an optical path folding element of an imaging lens module according to the 2nd embodiment of the present disclosure, Fig. 14 is an exploded view of the optical path folding element in Fig. 13, and Fig. 15 is a perspective view of a light blocking sheet of the optical path folding element in Fig. 13.

This embodiment provides an optical path folding element 200 that is similar to the optical path folding element 100 in the abovementioned embodiment, and the optical path folding element 200 can be applied to the imaging lens module 1 for replacing the optical path folding element 100 in the abovementioned embodiment.

The optical path folding element 200 includes an optical portion 210, a connection portion 220 and a light blocking layer 240, wherein the optical portion 210 and the connection portion 220 are formed by adhering two glass blocks SS and TT, as shown in Fig. 14.

The optical portion 210 is made of glass material, and the optical portion 210 has an optical surface 211, a first reflective surface 212 and a second reflective surface 213. The optical surface 211 integrates several functions of light incident, light emitting, and light reflection. The first reflective surface 212 is provided with a reflective layer. The second reflective surface 213 is also provided with a reflective layer. A light beam is incident into the optical path folding element 200 via the optical surface 211. In the optical path folding element 200, the first reflective surface 212 reflects the light beam, the optical surface 211 reflects the light beams again, and the second reflective surface 213 reflects the light beam further again. Then, the light beam emits from the optical path folding element 200 via the optical surface 211.

The connection portion 220 is made of glass. The connection portion 220 is located at the periphery of the optical portion 210. The connection portion 220 has a plurality of connection surfaces 221 connected to the optical surface 211, the first reflective surface 212 and the second reflective surface 213.

The light blocking layer 240 is disposed on the outer surfaces of the connection portion 220 for blocking light from passing through. Please be noted that the distribution range of the dot screentone shown in Fig. 13 to Fig. 15 refers to the arrangement range of the light blocking layer 240.

The connection portion 220 further includes a light blocking sheet 250. The light blocking sheet 250 is disposed between the first reflective surface 212 and the second reflective surface 213. As shown in Fig. 14, the light blocking sheet 250 is a flat element having a trimmed part towards the inner side of the optical path folding element 200 and is provided with the light blocking layer 240 thereon. The light blocking sheet 250 is clamped between the two glass blocks SS and TT forming the optical portion 210 and the connection portion 220 so as to reduce stray light inside the optical path folding element 200.

### 3rd Embodiment

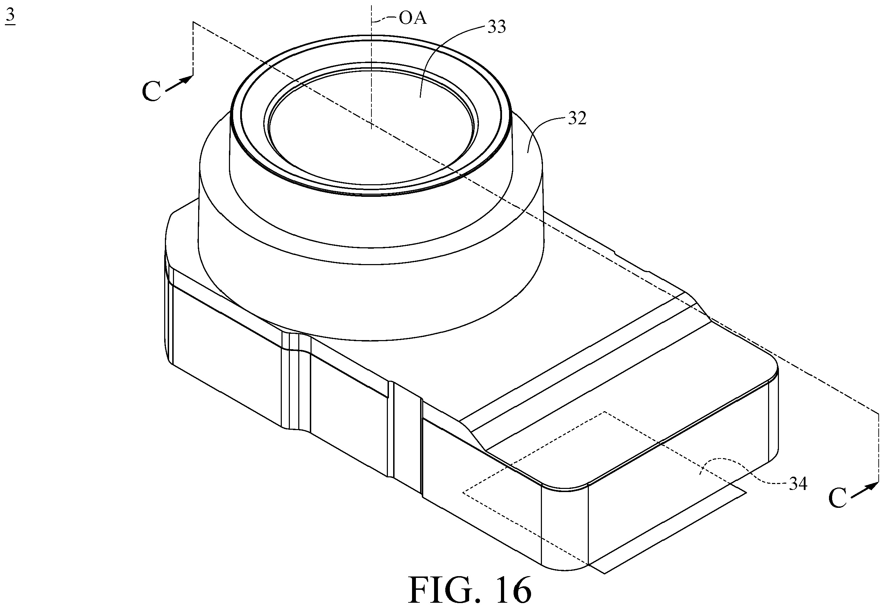

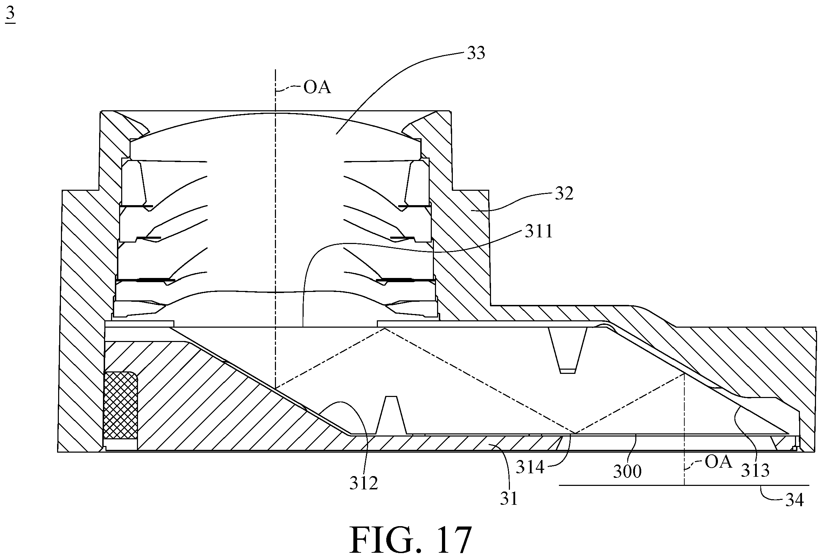

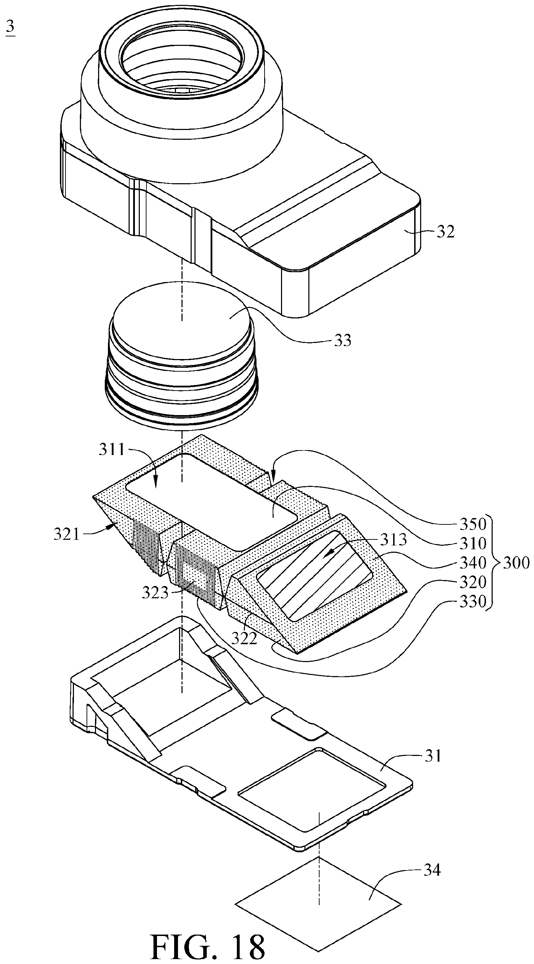

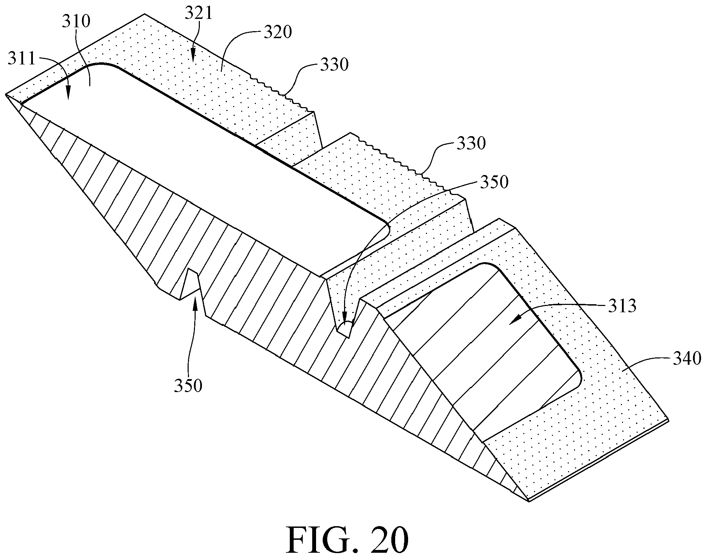

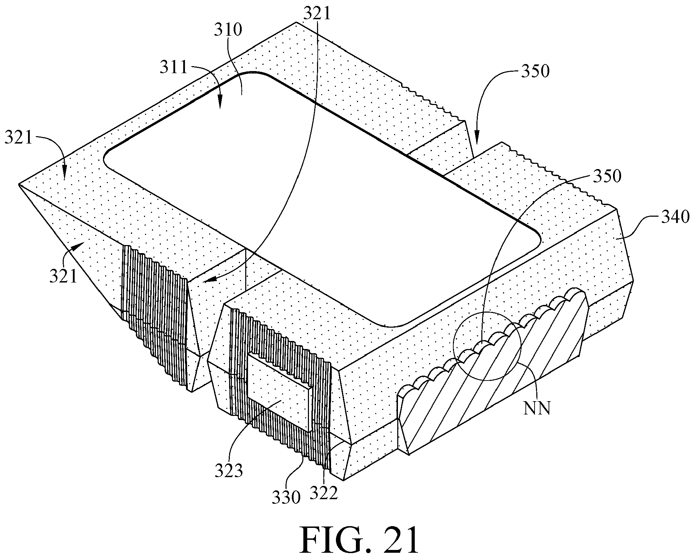

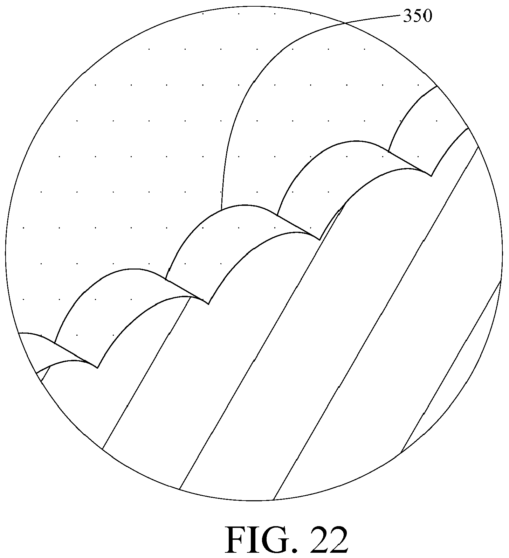

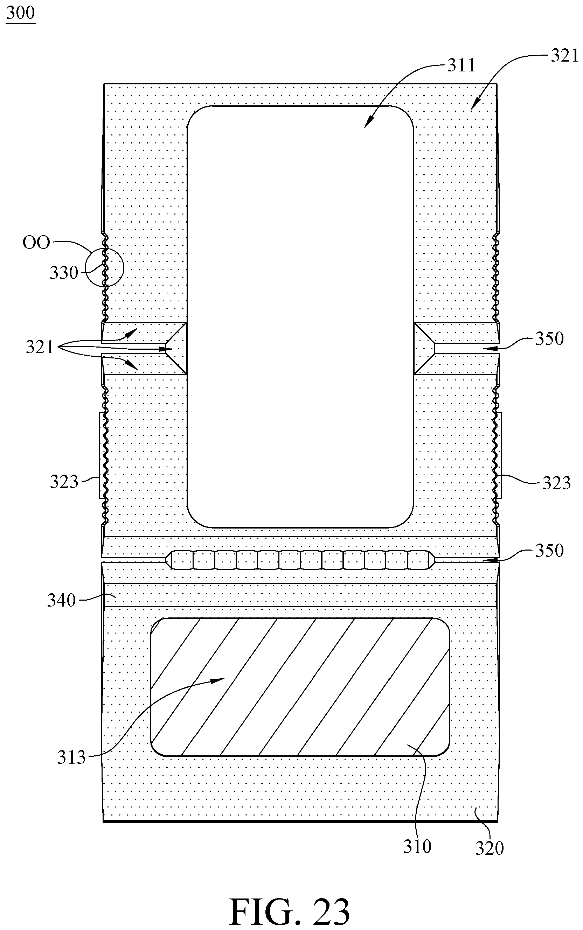

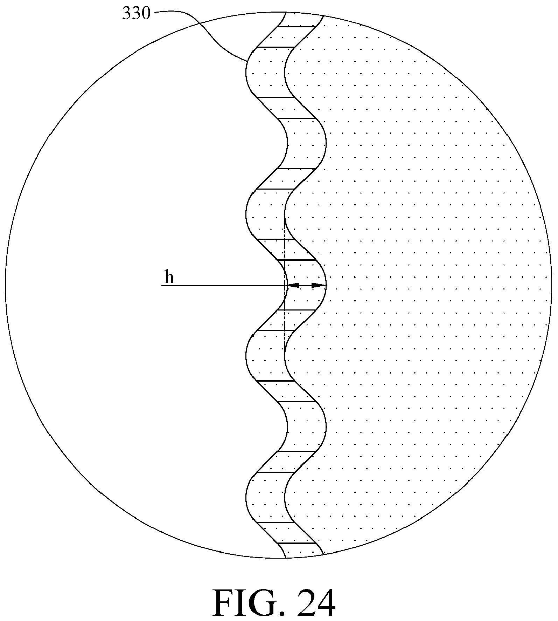

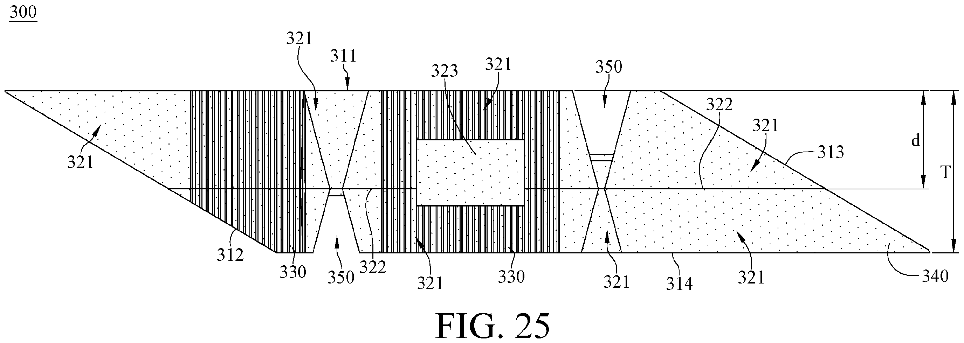

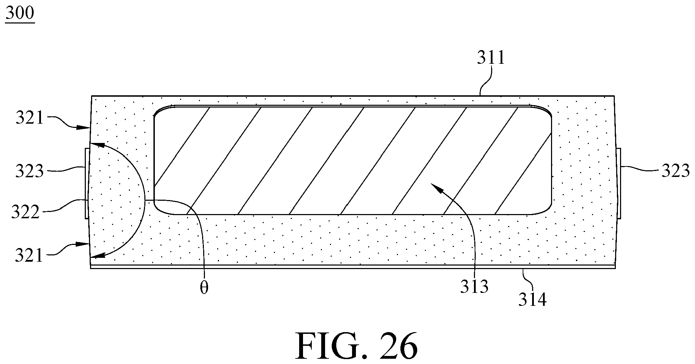

Please refer to Fig. 16 to Fig. 26, where Fig. 16 is a perspective view of an imaging lens module according to the 3rd embodiment of the present disclosure, Fig. 17 is a cross-sectional view of the imaging lens module sectioned along line C-C in Fig. 16, Fig. 18 is an exploded view of the imaging lens module in Fig. 16, Fig. 19 is a perspective view of an optical path folding element of the imaging lens module in Fig. 16, Fig. 20 is a perspective view of the optical path folding element sectioned along line D-D in Fig. 19, Fig. 21 is a perspective view of the optical path folding element sectioned along line E-E in Fig. 19, Fig. 22 is an enlarged view of region NN in Fig. 21, Fig. 23 is a top view of the optical path folding element in Fig. 19, Fig. 24 is an enlarged view of region OO in Fig. 23, Fig. 25 is a side view of the optical path folding element in Fig. 19, and Fig. 26 is a front view of the optical path folding element in Fig. 19.

This embodiment provides an imaging lens module 3 that includes a fixed element 31, an accommodation element 32, an optical path folding element 300, a lens assembly 33 and an image sensor 34. The accommodation element 32 is disposed on the fixed element 31 for forming an accommodation space (not numbered) therebetween. The optical path folding element 300 is disposed in the accommodation space. The lens assembly 33 is disposed in the accommodation space and is located at an object side of the optical path folding element 300 along an optical path, such that a light beam is able to be incident into the optical path folding element 300 after passing through the lens assembly 33 along an optical axis OA. Please be noted that the detail of the lens assembly 33 is not intended to restrict the present disclosure, and therefore the detailed contour of the lens assembly 33 is not shown in the drawings. The image sensor 34 is disposed outside the accommodation space and is located at an image side of the optical path folding element 300 so as to receive the light beam emitting from the optical path folding element 300.

The material of the optical path folding element 300 may include plastic. The optical path folding element 300 includes an optical portion 310, a connection portion 320, a plurality of matte structures 330 and a light blocking layer 340.

The optical portion 310 is made of plastic material, and the optical portion 310 has a first optical surface 311, a first reflective surface 312, a second reflective surface 313 and a second optical surface 314. The first optical surface 311 integrates several functions of light incident and light reflection. The first reflective surface 312 is provided with a reflective layer. The second reflective surface 313 is also provided with a reflective layer. The second optical surface 314 integrates several functions of light emitting and light reflection. As shown in Fig. 17, a light beam passes through the lens assembly 33 along the optical axis OA to be incident into the optical path folding element 300 via the first optical surface 311. In the optical path folding element 300, the first reflective surface 312 reflects the light beam, the first optical surface 311 reflects the light beams again (through total internal reflection), the second optical surface 314 reflects the light beams further again (through total internal reflection), and the second reflective surface 313 reflects the light beam still further again. Then, the light beam emits towards the image sensor 34 from the optical path folding element 300 via the second optical surface 314. Please be noted that the second optical surface 314 is able to reflect the light beam through total internal reflection as the first optical surface 311 performs, such that the second optical surface 314 is able to transmit and reflect light simultaneously.

The connection portion 320 is made of plastic. The connection portion 320 is located at the periphery of the optical portion 310, and the optical portion 310 is recessed with respect to the connection portion 320. The connection portion 320 has a plurality of connection surfaces 321, two boundary lines 322 and two gate traces 323. The connection surfaces 321 are connected to the first optical surface 311, the first reflective surface 312, the second reflective surface 313 and the second optical surface 314. The boundary lines 322 are disposed between the connection surfaces 321. The gate traces 323 are located on the connection surfaces 321.

As shown in Fig. 25, when a thickness of the optical path folding element 300 along a direction perpendicular to the first optical surface 311 is T, and a distance between the boundary lines 322 and the optical surface 311 along the direction perpendicular to the first optical surface 311 is d, the following conditions are satisfied: d= 1.565 [mm]; T = 2.585 [mm]; and d/T = 0.61.

As shown in Fig. 26, two of the connection surfaces 321 respectively located at opposite sides of each boundary line 322 are angled to each other by an angle. When the angle between the two connection surfaces 321 respectively located at the opposite sides of each boundary line 322 is θ, the following condition is satisfied: θ = 175.8 [deg.].

The matte structures 330 are disposed on and integrally formed with the connection portion 320, and at least part of the matte structures 330 is located at the periphery of the gate traces 323. As shown in Fig. 23 and Fig. 24, each unitary structure of the matte structures 330 is tapered off from an outer surface of the connection portion 320 towards the inner side of the optical path folding element 300 to form an arc-shaped recess, such that the outer surface of the connection portion 320 has an undulating shape.

As shown in Fig. 24, when a recess depth of each unitary structure of the matte structures 330 is h, the following condition is satisfied: h = 0.06 [mm].

The light blocking layer 340 is disposed on the outer surfaces of the connection portion 320 for blocking light from passing through, and at least part of the light blocking layer 340 is located on the gate traces 323. Please be noted that the distribution range of the dot screentone shown in Fig. 16 to Fig. 26 refers to the arrangement range of the light blocking layer 340.

The connection portion 320 further has a narrowed structure 350. The narrowed structure 350 is disposed between the first reflective surface 312 and the second reflective surface 313, and the narrowed structure 350 may be formed by at least part of the connection surfaces 321. As shown in Fig. 20, the narrowed structure 350 is shrunk towards the inner side of the optical path folding element 300 and is provided with the light blocking layer 340 thereon, such that the aperture size inside the optical path folding element 300 is partially reduced. As shown in Fig. 21 and Fig. 22, the narrowed structure 350 has wave-shaped edges for assisting the reduction of stray light.

**4th Embodiment**

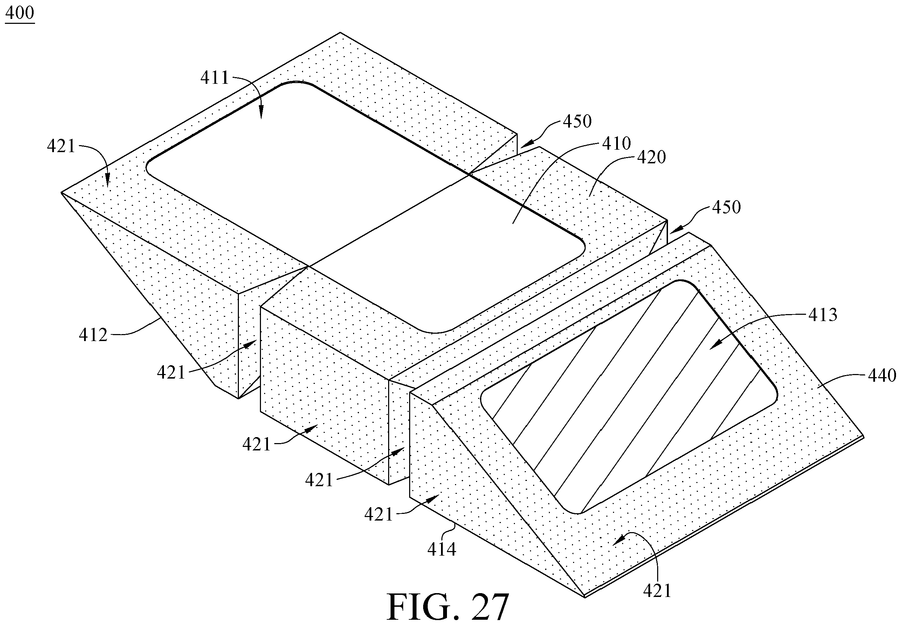

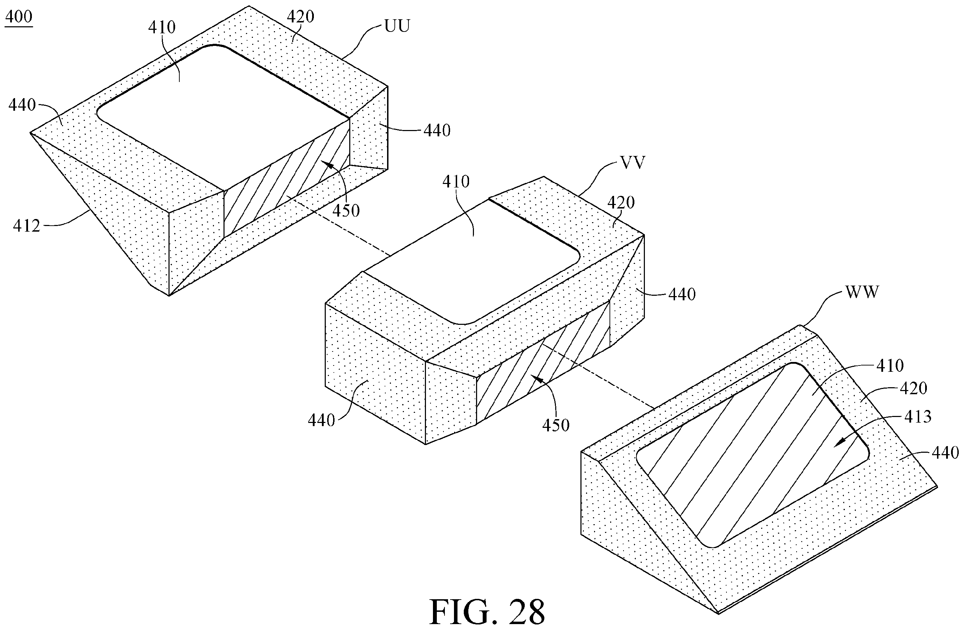

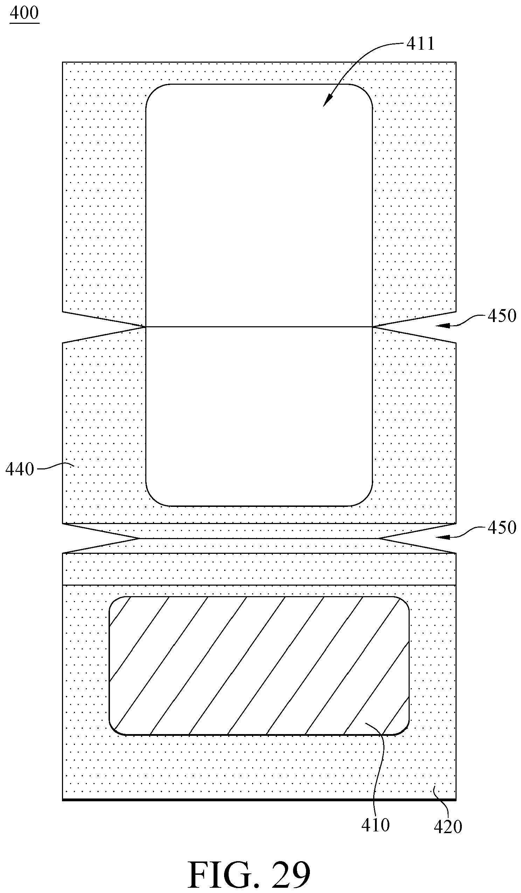

Please refer to Fig. 27 to Fig. 29, where Fig. 27 is a perspective view of an optical path folding element of an imaging lens module according to the 4th embodiment of the present disclosure, Fig. 28 is an exploded view of the optical path folding element in Fig. 27, and Fig. 29 is a top view of the optical path folding element in Fig. 27.

This embodiment provides an optical path folding element 400 that is similar to the optical path folding element 300 in the abovementioned embodiment, and the optical path folding element 400 can be applied to the imaging lens module 3 for replacing the optical path folding element 300 in the abovementioned embodiment.

The optical path folding element 400 includes an optical portion 410, a connection portion 420 and a light blocking layer 440, wherein the optical portion 410 and the connection portion 420 are formed by adhering three glass blocks UU, VV and WW, as shown in Fig. 28.

The optical portion 410 is made of glass material, and the optical portion 410 has a first optical surface 411, a first reflective surface 412, a second reflective surface 413 and a second optical surface 414. The first optical surface 411 integrates several functions of light incident and light reflection. The first reflective surface 412 is provided with a reflective layer. The second reflective surface 413 is also provided with a reflective layer. The second optical surface 414 integrates several functions of light emitting and light reflection. A light beam is incident into the optical path folding element 400 via the first optical surface 411. In the optical path folding element 400, the first reflective surface 412 reflects the light beam, the first optical surface 411 reflects the light beams again, the second optical surface 414 reflects the light beams further again, and the second reflective surface 413 reflects the light beam still further again. Then, the light beam emits from the optical path folding element 400 via the second optical surface 414.

The connection portion 420 is made of glass. The connection portion 420 is located at the periphery of the optical portion 410, and the optical portion 410 is recessed with respect to the connection portion 420. The connection portion 420 has a plurality of connection surfaces 421 connected to the first optical surface 411, the first reflective surface 412, the second reflective surface 413 and the second optical surface 414.

The light blocking layer 440 is disposed on the outer surfaces of the connection portion 420 for blocking light from passing through. Please be noted that the distribution range of the dot screentone shown in Fig. 27 to Fig. 29 refers to the arrangement range of the light blocking layer 440.

The connection portion 420 further has a narrowed structure 450. The narrowed structure 450 is disposed between the first reflective surface 412 and the second reflective surface 413, and the narrowed structure 450 may be formed by at least part of the connection surfaces 421. As shown in Fig. 28, the three glass blocks UU, VV and WW adhered together to forming the optical portion 410 and the connection portion 420 are processed by cutting, grinding, etc., such that the adhered areas between the three glass blocks UU, VV and WW are reduced to form the narrowed structure 450. The narrowed structure 450 is shrunk towards the inner side of the optical path folding element 400 and is provided with the light blocking layer 440 thereon, such that the aperture size inside the optical path folding element 400 is partially reduced.

**5th Embodiment**

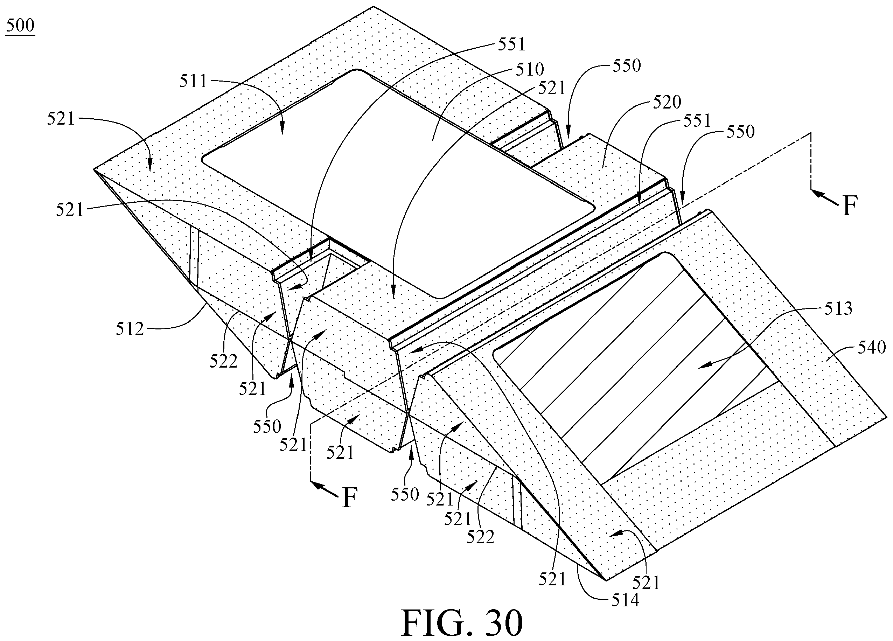

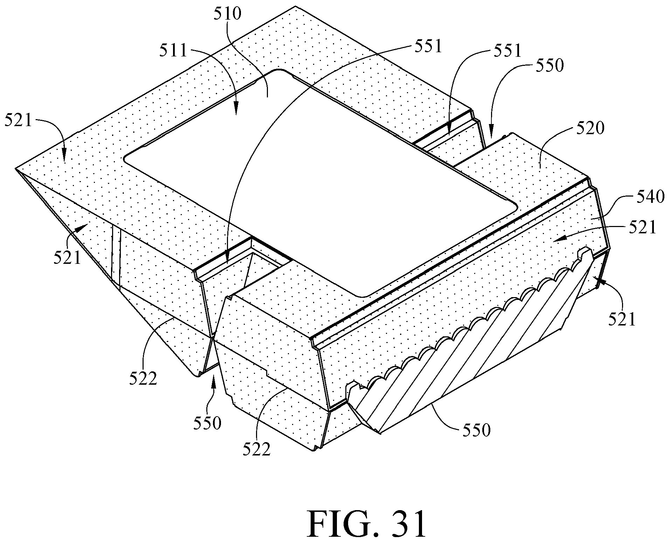

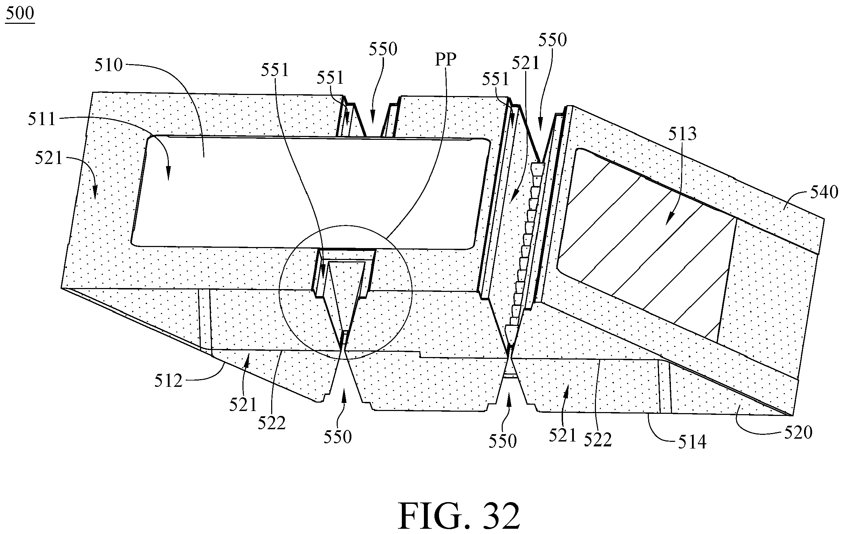

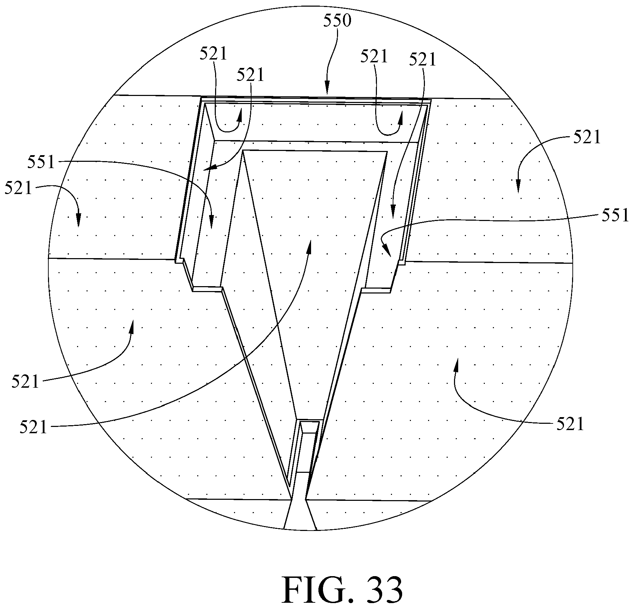

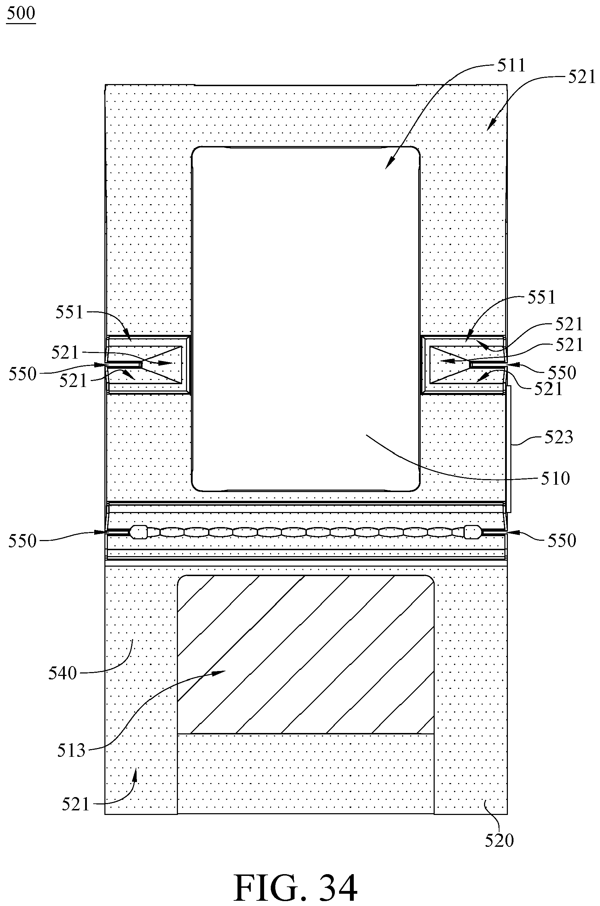

Please refer to Fig. 30 to Fig. 34, where Fig. 30 is a perspective view of an optical path folding element of an imaging lens module according to the 5th embodiment of the present disclosure, Fig. 31 is a perspective view of the optical path folding element sectioned along line F-F in Fig. 30, Fig. 32 is another perspective view of the optical path folding element in Fig. 30, Fig. 33 is an enlarged view of region PP in Fig. 32, and Fig. 34 is a top view of the optical path folding element in Fig. 30.

This embodiment provides an optical path folding element 500 that is similar to the optical path folding element 300 in the abovementioned embodiment, and the optical path folding element 500 can be applied to the imaging lens module 3 for replacing the optical path folding element 300 in the abovementioned embodiment.

The material of the optical path folding element 500 may include plastic. The optical path folding element 500 includes an optical portion 510, a connection portion 520 and a light blocking layer 540.

The optical portion 510 is made of plastic material, and the optical portion 510 has a first optical surface 511, a first reflective surface 512, a second reflective surface 513 and a second optical surface 514. The first optical surface 511 integrates several functions of light incident and light reflection. The first reflective surface 512 is provided with a reflective layer. The second reflective surface 513 is also provided with a reflective layer. The second optical surface 514 integrates several functions of light emitting and light reflection. A light beam is incident into the optical path folding element 500 via the first optical surface 511. In the optical path folding element 500, the first reflective surface 512 reflects the light beam, the first optical surface 511 reflects the light beams again, the second optical surface 514 reflects the light beams further again, and the second reflective surface 513 reflects the light beam still further again. Then, the light beam emits from the optical path folding element 500 via the second optical surface 514.

The connection portion 520 is made of plastic. The connection portion 520 is located at the periphery of the optical portion 510, and the optical portion 510 is recessed with respect to the connection portion 520. The connection portion 520 has a plurality of connection surfaces 521, two boundary lines 522 and one gate trace 523. The connection surfaces 521 are connected to the first optical surface 511, the first reflective surface 512, the second reflective surface 513 and the second optical surface 514. The boundary lines 522 are disposed between the connection surfaces 521. The gate trace 523 is located on the connection surfaces 521.

The light blocking layer 540 is disposed on the outer surfaces of the connection portion 520 for blocking light from passing through, and at least part of the light blocking layer 540 is located on the gate trace 523. Please be noted that the distribution range of the dot screentone shown in Fig. 30 to Fig. 34 refers to the arrangement range of the light blocking layer 540.

The connection portion 520 further has a narrowed structure 550. The narrowed structure 550 is disposed between the first reflective surface 512 and the second reflective surface 513, and the narrowed structure 550 may be formed by at least part of the connection surfaces 521. As shown in Fig. 32 and Fig. 33, the narrowed structure 550 is shrunk towards the inner side of the optical path folding element 500 and is provided with the light blocking layer 540 thereon, such that the aperture size inside the optical path folding element 500 is partially reduced. Further, as shown in Fig. 33, the narrowed structure 550 further has a step structure 551 at periphery thereof. The step structure 551 forms a wall-like protrusion or a groove-like recess at the periphery of the narrowed structure 550. As shown in Fig. 31, the narrowed structure 550 has wave-shaped edges for assisting the reduction of stray light.

## 6th Embodiment

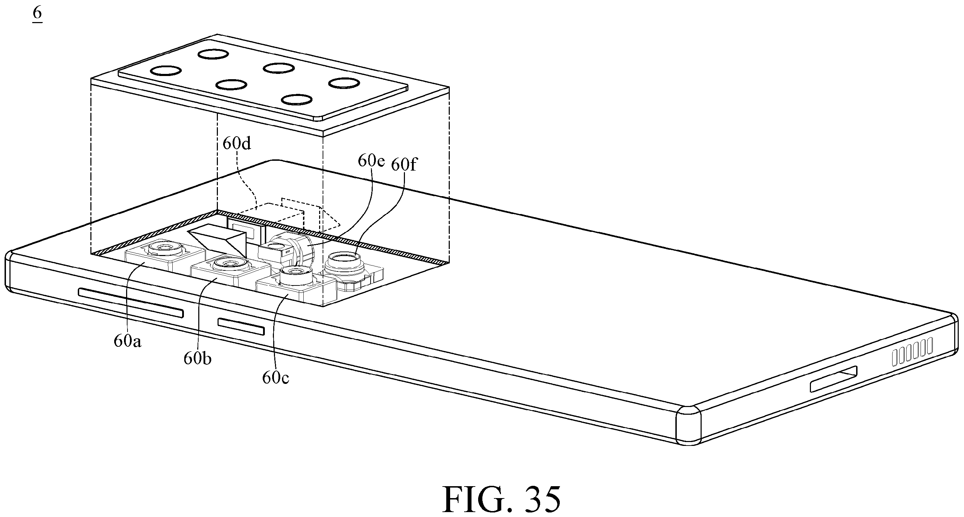

Please refer to Fig. 35, is an exploded view of an electronic device according to the 6th embodiment of the present disclosure.

An electronic device 6 provided in this embodiment is a smartphone including an imaging lens module 60a, an imaging lens module 60b, an imaging lens module 60c, an imaging lens module 60d, an imaging lens module 60e, an imaging lens module 60f, a flash module, a focus assist module, an image signal processor, a display module and an image software processor (not shown). The imaging lens module 60a, the imaging lens module 60b, the imaging lens module 60c, the imaging lens module 60d, the imaging lens module 60e, and the imaging lens module 60f are disposed on the same side of the electronic device 6, while the display module is disposed on the opposite side of the electronic device 6. Moreover, the imaging lens module 60f includes the imaging lens module 1 disclosed in the 1st embodiment. However, the present disclosure is not limited thereto. The imaging lens module 60f may include the imaging lens module disclosed in any one of the abovementioned embodiments.

The imaging lens module 60a is an ultra-wide-angle lens, the imaging lens module 60b is a wide-angle main lens, the imaging lens module 60c is a telephoto lens, the imaging lens module 60d is an ultra-telephoto lens, the imaging lens module 60e is an ultra-telephoto lens, and the imaging lens module 60f is an ultra-telephoto lens. The imaging lens module 60f may have a field of view ranging from 15 degrees to 38 degrees. In this embodiment, the imaging lens modules 60a, 60b, 60c, 60d, 60e and 60f have different fields of view, such that the electronic device 6 can have various magnification ratios so as to meet the requirement of optical zoom functionality. Moreover, each of the imaging lens module 60d and the imaging lens module 60e is an ultra-telepho-to lens having a reflective element, and the imaging lens module 60f is a lens having the optical path folding element 100, which is favorable for thinness of the electronic device 6. In this embodiment, the electronic device 6 includes multiple imaging lens modules 60a, 60b, 60c, 60d, 60e and 60f, but the present disclosure is not limited to the number and arrangement of imaging lens modules.

When a user captures images of an object, the light rays converge in the imaging lens module 60a, the imaging lens module 60b, the imaging lens module 60c, the imaging lens module 60d, the imaging lens module 60e or the imaging lens module 60f to generate images, and the flash module is activated for light supplement. The focus assist module detects the object distance of the imaged object to achieve fast auto focusing. The image signal processor is configured to optimize the captured image to improve image quality and provided zooming function. The light beam emitted from the focus assist module can be either conventional infrared or laser. The display module can include a touch screen or a physical button. The image software processor having multiple functions to capture images and complete image processing, and the image processed by the image software processor can be displayed on the display module.

Please be noted that a lens cover of the electronic device 6 shown in Fig. 35 being spaced apart from the main body thereof is only for better showing the imaging lens modules inside the electronic device 6. It doesn't mean the lens cover have to be removable, and the present disclosure is not limited thereto.

The smartphone in these embodiments is only exemplary for showing the imaging lens module of the present disclosure installed in the electronic device 6, and the present disclosure is not limited thereto. The imaging lens module of the present disclosure can be optionally applied to optical systems with a movable focus. Furthermore, the imaging lens module of the present disclosure feature good capability in aberration corrections and high image quality, and can be applied to 3D image capturing applications, in products such as digital cameras, mobile devices, digital tablets, smart televisions, network surveillance devices, dashboard cameras, vehicle backup cameras, multi-camera devices, image recognition systems, motion sensing input devices, wearable devices and other electronic imaging devices.

The foregoing description, for the purpose of explanation, has been described with reference to specific embodiments. It is to be noted that the present disclosure shows different data of the different embodiments; however, the data of the different embodiments are obtained from experiments. The embodiments were chosen and described in order to best explain the principles of the disclosure and its practical applications, to thereby enable others skilled in the art to best utilize the disclosure and various embodiments with various modifications as are suited to the particular use contemplated. The embodiments depicted above and the appended drawings are exemplary and are not intended to be exhaustive or to limit the scope of the present disclosure to the precise forms disclosed. Many modifications and variations are possible in view of the above teachings.

**Claims**

1. An optical path folding element (100), comprising:

   an optical portion (110), having:

      an optical surface (111), wherein a light beam enters into the optical path folding element (100) via the optical surface (111) and is reflected inside the optical path folding element (100) through the optical surface (111);
      a first reflective surface (112), configured to reflect the light beam again inside the optical path folding element (100); and
      a second reflective surface (113), configured to reflect the light beam further again inside the optical path folding element (100);

   a connection portion (120), having:
   a plurality of connection surfaces (121), connected to the optical surface (111), the first reflective surface (112) and the second reflective surface (113);
   a plurality of matte structures (130), at least disposed on and integrally formed with the connection portion (120), wherein each unitary structure of the plurality of matte structures (130) is tapered off and recessed from an outer surface of the connection portion (120) towards an inner side of the optical path folding element (100), such that the outer surface of the connection portion (120) has an undulating shape; and
   a light blocking layer (140), at least disposed on the outer surface of the connection portion (120) for blocking light from passing through.

2. The optical path folding element (100) according to claim 1, wherein the light beam emits from the optical path folding element (100) via the optical surface (111).

3. The optical path folding element (100) according to claim 1, wherein a recess depth of each unitary structure of the plurality of matte structures (130) is h, and the following condition is satisfied:

$$0.02 \, [mm] \le h \le 1.6 \, [mm].$$

4. The optical path folding element (100) according to claim 1, wherein a material of the light blocking layer (140) comprises acrylic monomer and black pigment.

5. The optical path folding element (100) according to claim 4, wherein the connection portion (120) further has a narrowed structure (150) that partially reduces an aperture size inside the optical path folding element (100).

6. The optical path folding element (100) according to claim 5, wherein the narrowed structure (150) is disposed between the first reflective surface (112) and the second reflective surface (113), and the narrowed structure (150) is covered by the light blocking layer (140).

7. The optical path folding element (100) according to claim 1, wherein the connection portion (120) further has a boundary line (122) located between two of the plurality of connection surfaces (121), an angle between the two of the plurality of connection surfaces (121) respectively located at opposite sides of the boundary line (122) is θ, and the following condition is satisfied:

$$130 \ [deg.] \leq \theta \leq 179 \ [deg.].$$

8. The optical path folding element (100) according to claim 7, wherein a thickness of the optical path folding element (100) along a direction perpendicular to the optical surface (111) is T, a distance between the boundary line (122) and the optical surface (111) along the direction perpendicular to the optical surface (111) is d, and the following condition is satisfied:

$$0.25 \leq d/T \leq 0.75.$$

9. The optical path folding element (100) according to claim 1, wherein the connection portion (120) further has at least one gate trace (123) located on at least one of the plurality of connection surfaces (121).

10. The optical path folding element (100) according to claim 9, wherein the at least one gate trace (123) is surrounded by the plurality of matte structures (130).

11. The optical path folding element (100) according to claim 1, wherein the optical portion (110) is recessed with respect to the connection portion (120) located around the optical portion (110).

12. An optical path folding element (300), comprising:

an optical portion (310), having:

an optical surface (311), wherein a light beam enters into the optical path folding element (300) via the optical surface (311) and is reflected inside the optical path folding element (300) through the optical surface (311);
a first reflective surface (312), configured to reflect the light beam again inside the optical path folding element (300); and
a second reflective surface (313), configured to reflect the light beam further again inside the optical path folding element (300);

a connection portion (320), having:
a plurality of connection surfaces (321), connected to the optical surface (311), the first reflective surface (312) and the second reflective surface (313); and
a light blocking layer (340), at least disposed on the connection portion (320) for blocking light from passing through, and a material of the light blocking layer (340) comprises acrylic monomer and black pigment.

13. The optical path folding element (300) according to claim 12, further comprising a plurality of matte structures (330) that are at least disposed on and integrally formed with the connection portion (320), wherein each unitary structure of the plurality of matte structures (330) is tapered off and recessed from an outer surface of the connection portion (320) towards an inner side of the optical path folding element (300), such that the outer surface of the connection portion (320) has an undulating shape.

14. The optical path folding element (300) according to claim 13, wherein a recess depth of each unitary structure of the plurality of matte structures (330) is h, and the following condition is satisfied:

$$0.02 \ [mm] \leq h \leq 1.6 \ [mm].$$

15. The optical path folding element (300) according to claim 12, wherein the light beam emits from the optical path folding element (300) via the optical surface (311).

16. The optical path folding element (300) according to claim 12, wherein the connection portion (320) further has a narrowed structure (350) that partially reduces an aperture size inside the optical path folding element (300).

17. The optical path folding element (300) according to claim 12, wherein the connection portion (320) further has a boundary line (322) located between two of the plurality of connection surfaces (321), an angle between the two of the plurality of connection surfaces (321) respectively located at opposite sides of the boundary line (322) is θ, and the following condition is satisfied:

$$130 \text{ [deg.]} \leq \theta \leq 179 \text{ [deg.]}.$$

**18.** The optical path folding element (300) according to claim 17, wherein a thickness of the optical path folding element (300) along a direction perpendicular to the optical surface (311) is T, a distance between the boundary line (322) and the optical surface (311) along the direction perpendicular to the optical surface (311) is d, and the following condition is satisfied:

$$0.25 \leq d/T \leq 0.75.$$

**19.** The optical path folding element (300) according to claim 13, wherein the connection portion (320) further has at least one gate trace (323) located on at least one of the plurality of connection surfaces (321).

**20.** The optical path folding element (300) according to claim 19, wherein the at least one gate trace (323) is surrounded by the plurality of matte structures (330).

**21.** An optical path folding element (100), comprising:

an optical portion (110), having:

an optical surface (111), wherein a light beam enters into the optical path folding element (100) via the optical surface (111);
a first reflective surface (112), configured to reflect the light beam inside the optical path folding element (100); and
a second reflective surface (113), configured to reflect the light beam again inside the optical path folding element (100);

a connection portion (120), having:

a plurality of connection surfaces (121), connected to the optical surface (111), the first reflective surface (112) and the second reflective surface (113); and
at least one gate trace (123), located on at least one of the plurality of connection surfaces (121);

a plurality of matte structures (130), at least disposed on and integrally formed with the connection portion (120), wherein the plurality of matte structures (130) have at least part disposed on the connection portion (120) to surround the at least one gate trace (123), and each unitary structure of the plurality of matte structures (130) is tapered off and recessed from an outer surface of the connection portion (120) towards an inner side of the optical path folding element (100), such that the outer surface of the connection portion (120) has an undulating shape; and
a light blocking layer (140), at least disposed on the connection portion (120) for blocking light from passing through.

**22.** The optical path folding element (100) according to claim 21, wherein the optical surface (111) reflects the light beam entering into the optical path folding element (100) further again, and the light beam emits from the optical path folding element (100) via the optical surface (111).

**23.** The optical path folding element (100) according to claim 21, wherein the at least one gate trace (123) is covered by the light blocking layer (140).

**24.** The optical path folding element (100) according to claim 21, wherein a recess depth of each unitary structure of the plurality of matte structures (130) is h, and the following condition is satisfied:

$$0.02 \text{ [mm]} \leq h \leq 1.6 \text{ [mm]}.$$

**25.** The optical path folding element (100) according to claim 21, wherein a material of the light blocking layer (140) comprises acrylic monomer and black pigment.

**26.** The optical path folding element (100) according to claim 21, wherein the connection portion (120) further has a narrowed structure (150) formed by at least part of the plurality of connection surfaces (121) and partially reducing an aperture size inside the optical path folding element (100).

**27.** The optical path folding element (100) according to claim 21, wherein the connection portion (120) further has a boundary line (122) located between two of the plurality of connection surfaces (121), an angle between the two of the plurality of connection surfaces (121) respectively located at opposite sides of the boundary line (122) is θ, and the following condition is satisfied:

$$130 \text{ [deg.]} \leq \theta \leq 179 \text{ [deg.]}.$$

**28.** The optical path folding element (100) according to claim 27, wherein a thickness of the optical path folding element (100) along a direction perpendicular to the optical surface (111) is T, a distance between the boundary line (122) and the optical surface (111) along the direction perpendicular to the optical surface (111) is d, and the following condition is satisfied:

$$0.25 \leq d/T \leq 0.75.$$

**29.** An optical path folding element (300), a material of the optical path folding element (300) comprising plastic, the optical path folding element (300) comprising:

an optical portion (310), having:

an optical surface (311), wherein a light beam enters into the optical path folding element (300) via the optical surface (311); a first reflective surface (312), configured to reflect the light beam inside the optical path folding element (300); and a second reflective surface (313), configured to reflect the light beam again inside the optical path folding element (300);

a connection portion (320), having:

a plurality of connection surfaces (321), connected to the optical surface (311), the first reflective surface (312) and the second reflective surface (313); and a narrowed structure (350), formed by at least part of the plurality of connection surfaces (321) and partially reducing an aperture size inside the optical path folding element (300); and

a light blocking layer (340), at least disposed on at least outer surface of the connection portion (320) for blocking light from passing through, wherein a material of the light blocking layer (340) comprises acrylic monomer and black pigment.

**30.** The optical path folding element (300) according to claim 29, wherein the optical surface (311) reflects the light beam entering into the optical path folding element (300) further again.

**31.** The optical path folding element (300) according to claim 30, wherein the light beam emits from the optical path folding element (300) via a second optical surface (314) that is different from the optical surface (311).

**32.** The optical path folding element (300) according to claim 29, wherein the narrowed structure (350) is disposed between the first reflective surface (312) and the second reflective surface (313), and the narrowed structure (350) is covered by the light blocking layer (340).

**33.** The optical path folding element (500) according to claim 32, wherein the narrowed structure (550) further has a step structure (551) at periphery thereof, and the step structure (551) forms a protrusion or a recess at the periphery of the narrowed structure (550).

**34.** The optical path folding element (300) according to claim 29, further comprising a plurality of matte structures (340) that are at least disposed on and integrally formed with the connection portion (320), wherein each unitary structure of the plurality of matte structures (340) is tapered off and recessed from an outer surface of the connection portion (320) towards an inner side of the optical path folding element (300), such that the outer surface of the connection portion (300) has an undulating shape.

**35.** The optical path folding element (300) according to claim 29, wherein the connection portion (320) further has at least one gate trace (323) located on at least one of the plurality of connection surfaces (321).

**36.** The optical path folding element (300) according to claim 29, wherein the connection portion (320) further has a boundary line (322) located between two of the plurality of connection surfaces (321), an angle between the two of the plurality of connection surfaces (321) respectively located at opposite sides of the boundary line (322) is θ, and the following condition is satisfied:

$$130 \, [\text{deg.}] \leq \theta \leq 179 \, [\text{deg.}].$$

**37.** The optical path folding element (300) according to claim 36, wherein a thickness of the optical path folding element (300) along a direction perpendicular to the optical surface (311) is T, a distance between the boundary line (322) and the optical surface (321) along the direction perpendicular to the optical surface (321) is d, and the following condition is satisfied:

$$0.25 \leq d/T \leq 0.75.$$

**38.** The optical path folding element (300) according to claim 29, wherein the optical portion (310) is recessed with respect to the connection portion (320) located around the optical portion (310).

**39.** An imaging lens module (1), comprising:

the optical path folding element (100) of one of claims 1, 12, 21, and 29; a lens assembly (13), disposed adjacent to the optical path folding element (100), wherein the light beam passes through the lens assembly (13); and

an image sensor (14), disposed adjacent to the optical path folding element (100), wherein the image sensor (14) is configured to receive the light beam.

40. The image lens module (1) according to claim 39, wherein the lens assembly (13) has an aperture stop(13b), and the aperture stop (13b) is elliptical.

41. An electronic device (6), comprising:
the image lens module (1) of claim 39.

FIG. 1

EP 4 372 428 A2

FIG. 2

13a

13b

FIG. 3

FIG. 4

FIG. 5

FIG. 6

EP 4 372 428 A2

FIG. 7

FIG. 8

100

FIG. 9

FIG. 10

FIG. 11

EP 4 372 428 A2

FIG. 12

EP 4 372 428 A2

FIG. 13

FIG. 14

EP 4 372 428 A2

FIG. 15

FIG. 16

EP 4 372 428 A2

FIG. 17

EP 4 372 428 A2

FIG. 18

FIG. 19

FIG. 20

FIG. 21

EP 4 372 428 A2

FIG. 22

300

311    321

OO
330

321    350

323    323

350

340

313

310    320

FIG. 23

FIG. 24

FIG. 25

FIG. 26

EP 4 372 428 A2

FIG. 27

FIG. 28

400

411

450

440

450

410    420

FIG. 29

FIG. 30

EP 4 372 428 A2

FIG. 31

500

510
511
521

550
551  551  550  PP  551  521  550

513
540

512
521  522  550  550  521  522  514  520

FIG. 32

FIG. 33

EP 4 372 428 A2

500

FIG. 34

FIG. 35